# EUROPÄISCHE PATENTSCHRIFT

(11) **EP 2 024 056 B1**
(45) Veröffentlichungstag und Bekanntmachung des Hinweises auf die Patenterteilung: **10.04.2013**
(21) Anmeldenummer: 07724767.4
(22) Anmeldetag: 02.05.2007
(51) Int. Cl.: B01D 53/04, B01D 53/26

(54) **TROCKNUNG VON DRUCKLUFT UNTER NUTZUNG DER VERDICHTERWÄRME MIT GESCHLOSSENEM REGENERATIONSKREISLAUF**
DRYING COMPRESSED AIR USING COMPRESSOR HEAT IN A SEALED REGENERATION CYCLE
SÉCHAGE D'AIR COMPRIMÉ EN UTILISANT LA CHALEUR DE COMPRESSEUR AVEC CIRCUIT DE RÉGÉNÉRATION FERMÉ

(30) Priorität: 11.05.2006 DE 102006022293
(43) Veröffentlichungstag der Anmeldung: 18.02.2009
(73) Patentinhaber: BEKO TECHNOLOGIES GMBH, 41468 Neuss (DE)
(72) Erfinder: BLAUSCHECK, Herbert, 44357 Dortmund (DE)
(74) Vertreter: Isfort, Olaf
(86) Internationale Anmeldenummer: PCT/EP2007/003841
(87) Internationale Veröffentlichungsnummer: WO 2007/131627

(56) Entgegenhaltungen:
- EP-A1- 1 027 913
- EP-A1- 1 226 860
- DE-A1- 3 814 175
- US-A- 3 800 507
- US-A- 4 304 577
- US-A- 5 779 768

## Beschreibung

Die vorliegende Erfindung betrifft eine Anlage für die Trocknung von Druckluft, mit den Merkmalen (a) bis (g) des Anspruch 1. Ferner betrifft die Erfindung ein Verfahren zur Regeneration eines Adsorptionsbehälters einer solchen Anlage mit den Merkmalen des Anspruchs 5.

Bei den vorliegenden Anlagen werden zumindest zwei parallel geschaltete, mit Trocknungsmittel gefüllte Adsorptionsbehälter abwechselnd im Adsorptions- bzw. im Regenerationsbetrieb gefahren. Im Adsorptionsbetrieb trocknet das Trocknungsmittel die zu trocknende Druckluft, im Regenerationsbetrieb wird das mit Feuchtigkeit beladene Trocknungsmittel erst durch Desorption getrocknet und danach gekühlt. Die Trocknung des Trocknungsmittels erfolgt unter Nutzung der Wärme, die in der zu trocknenden, feuchten Druckluft enthalten ist. Diese entsteht durch die Verdichtungsarbeit des nicht zur Anlage gehörigen Kompressors, der aus der feuchten Umgebungsluft die zu trocknende Druckluft verdichtet.

Beim bekannten Stand der Technik ist vorgesehen, die gebundene Feuchtigkeit im Trocknungsmittel des im Regenerationsbetrieb befindlichen Adsorptionsbehälters durch einen heißen Druckluftstrom zu desorbieren und nach Abgabe der gebundenen Feuchtigkeit durch einen kühleren Druckluftstrom zu kühlen, wobei der kühlere Drucktuftstrom mit Feuchtigkeit gesättigt ist.

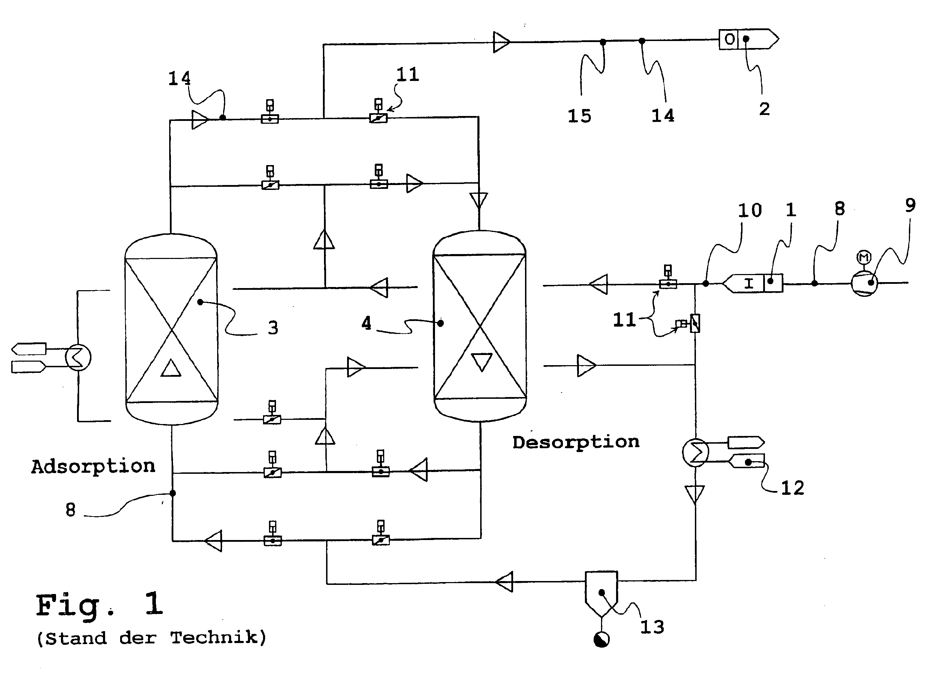

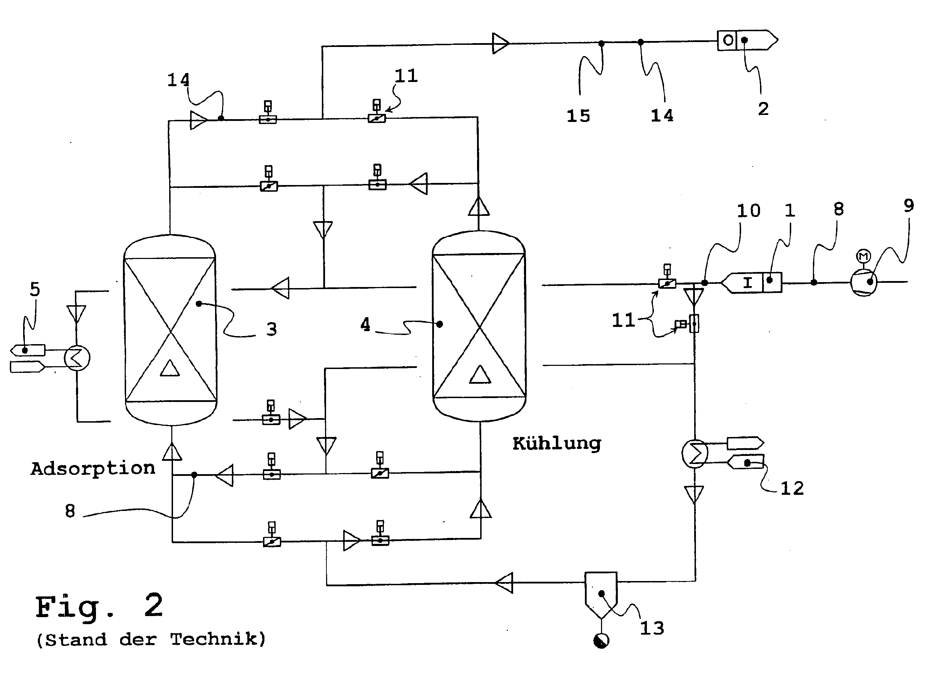

Ein Verfahrensfließbild einer gattungsgemäßen Anlage ist in unterschiedlichen Phasen in den Figuren 1 und 2 dargestellt:
- Fig. 1:: Bekannte Anlage in Desorptionsphase (Stand der Technik);
- Fig. 2:: bekannte Anlage in Kühlphase (Stand der Technik).

Die in den Figuren 1 und 2 dargestellte Anlage zur Trocknung von Druckluft wird über einen Eintritt 1 und einen Austritt 2 mit einem nicht zur Anlage gehörigen Kompressor 9 bzw. mit dem nicht dargestellten Druckluftnetz verbunden. Der Kompressor 9 saugt feuchte Umgebungsluft an und verdichtet sie. Die zu trocknende, feuchte Druckluft 8 tritt durch den Eintritt 1 in die Anlage ein. Die Anlage umfasst zwei parallel geschaltete Adsorptionsbehälter 3, 4, von denen sich stets einer 3 in Adsorptionsbetrieb und der andere 4 in Regenerationsbetrieb befindet. Bei allen hier beschriebenen Zeichnungen befindet sich jeweils der linke Adsorptionsbehälter 3 im Adsorptionsbetrieb, während dessen der rechte Behälter 4 sich entweder im Regenerationsbetrieb oder in Bereitschaftsbetrieb befindet. Die Regeneration umfasst die aufeinander folgenden Schritte Desorption und Kühlung.

In Figur 1 wird der rechte Adsorptionsbehälter 4 desorbiert. Hierfür wird die feuchte Druckluft 8 über eine Einlassleitung 10 als Desorptions-Druckluftstrom durch den rechten Behälter 4 geführt. Dabei gibt das in dem Behälter 4 befindliche Trockenmittel seine Feuchtigkeit an den Desorptions-Druckluftstrom ab. Dies ist aufgrund der Wärme in der zu trocknenden Druckluft 8 möglich, die durch den Verdichtungsprozess im Kompressor 9 entsteht. Die Stellorgane 11 der Anlage sind so geschaltet, dass der Druckluftstrom weiter durch einen Kühler 12 gekühlt und das dadurch kondensierende Wasser in einer Tropfenfalle 13 abgeschieden wird. Die der zu trocknenden Druckluft 8 entnommenen Feuchtigkeit verlässt die Anlage somit an der Tropfenfalle 13. Die zu trocknende Druckluft 8 wird nun durch den im Adsorptionsbetrieb befindlichen linken Adsorptionsbehälter 3 geführt. Das darin enthaltene Trockenmittel adsorbiert die Feuchtigkeit, so dass trockene Druckluft 14 entsteht. Diese wird über eine Auslassleitung 15 zum Auslass 2 geführt und von dort in das nicht gezeichnete Druckluftnetz eingespeist.

In der in Figur 2 dargestellten Kühlphase sind die Stellorgane 11 der Anlage so geschaltet, dass der durch die Einlassleitung 10 geführte Strom der feuchten Druckluft 8 zunächst im Kühler 12 gekühlt, dann in der Tropfenfalle 13 kondensiert und anschließend als Kühl-Druckluftstrom durch den rechten Behälter 4 geführt wird. Da der Kühl-Druckluftstrom die Wärme des frisch desorbierten Trockenmittels aufgenommen hat, muss dieser zunächst durch einen Hilfskühler 5 geführt werden, bevor die feuchte Druckluft 8 im linken Adsorptionsbehälter 3 getrocknet werden kann. Die nunmehr getrocknete Druckluft 14 wird über die Auslassleitung 15 zum Austritt 2 geführt und von dort ins Netz eingespeist.

Nachteilig bei den soeben beschriebenen Trocknungsanlagen ist, dass sowohl die Desorptions- wie auch die Kühlphase nur dann erfolgen kann, wenn eine Druckluftströmung vom Kompressor zum Druckluftverbraucher vorliegt. Dies bedeutet, dass der Kompressor 9 bereits beim Hochfahren der Anlage im Betrieb sein muss, um die für die anfängliche Desorption notwendige Verdichterwärme zu erzeugen. Die dabei aus der noch nicht vollständig konditionierten Anlage austretende Druckluft hat noch nicht die erforderliche Qualität, die bei sensiblen Anwendungen in der Pharma-, Lebensmittel- oder Halbleiterindustrie gefordert wird. Die beim Hochfahren der Anlage energieintensiv erzeugte Druckluft muss daher ungenutzt abgeblasen werden. Hierdurch geht nicht nur Energie, sondern auch Zeit verloren.

Im Hinblick auf den in den Figuren 1 und 2 dargestellten Stand der Technik liegt der vorliegenden Erfindung die Aufgabe zugrunde, eine Anlage für die Trocknung von Druckluft anzugeben, die trockene Druckluft von höherer Qualität ohne zusätzlichen Zeit- und Energieaufwand liefert.

Gelöst wird diese Aufgabe dadurch, dass die Anlage eine Rückführleitung aufweist, die von dem im Regenerationsbetrieb befindlichen Adsorptionsbehälter auf die Einlassleitung dergestalt schaltbar ist, dass über die Teilstromleitung ein Teilstrom der trockenen Druckluft vor dem Auslass abzweigbar, als Druckluftstrom durch den im Regenerationsbetrieb befindlichen Adsorptionsbehälter hindurchführbar und schließlich über die Rückführleitung in den Strom der zu trocknenden, feuchten Druckluft zurückführbar ist.

Um die Rückführung zu ermöglichen, ist an der Teilstromleitung eine Druckerhöhungspumpe vorzusehen, mittels welchem der Druck des Teilstroms der trockenen Druckluft steigerbar ist. Auf diese Weise wird der Druckverlust in dem in Regenerationsphase befindlichen Adsorptionsbehälters ausgeglichen, so dass eine Rückführung des Teilstroms in den Hauptstrom möglich ist.

Bei der Anlage wird die Kühlphase mittels bereits getrockneter Luft durchgeführt. Diese geht jedoch nicht verloren. Dank der Druckerhöhungspumpe kann der abgezweigte Teilstrom dem Hauptstrom, der zur Trocknung gelangt, wieder beigespeist werden. Dies eröffnet zwei wesentliche Vorteile: Durch das Kühlen des Trocknungsmittels mit getrockneter Druckluft verändern sich die physikalischen Verhältnisse im Adsorber. Nach der abgeschlossenen Desorptionsphase mit heißer, aber jedoch mit Feuchtigkeit beladener Druckluft, befinden sich das Trockenmittel und der Desorptions-Druckluftstrom in einem Gleichgewicht. Die zu trocknende Druckluft weist einen signifikant kleineren Partialdruck des Wasserdampfes auf. Der nun herrschende Partialdruckunterschied zwischen dem Kühlluftstrom und dem Trockenmittel bewirkt als treibende Kraft eine Nachdesorption des Adsorbens. Durch die Nachdesorption verringert sich die Restbeladung an Wassermolekülen im Trockenmittel. Die Restbeladung des Trockenmittels ist voranging für die Qualität der Drucklufttrocknung verantwortlich. Es stellt sich somit eine Qualitätsverbesserung ohne zusätzliche Zuheizenergie ein. Darüber hinaus ist ein zusätzlicher Hilfskühler für die Rückkühlung des Kühlluftstroms nicht erforderlich.

Eine vorteilhafte Weiterbildung der Erfindung sieht vor, dass die Teilstromleitung einen Wärmeübertrager durchläuft, bevor sie in den im Regenerationsbetrieb befindlichen Adsorptionsbehälter mündet. Der Wärmeübertrager dient zur Erwärmung oder zur Kühlung des Teilstroms der trockenen Druckluft. Hierdurch wird die Desorption bzw. die Kühlung verbessert.

Die Wärme, die mit Hilfe des Wärmeübertragers auf den Teilstrom abgegeben wird, wird entweder von einem externen Heizmedium aus der ohnehin vorhandenen Kompressorwärme bezogen.

Zur Nutzung der Kompressorwärme wird die Wärme der zu trocknenden, feuchten Druckluft in dem Wärmeübertrager auf den entlang der Teilstromleitung geführten Teilstrom der trockenen Druckluft übertragen.

Ein besonderer Vorteil besteht darin, den Teilstrom mit Hilfe der Wärme eines optionalen externen Heizmediums zu erwärmen. Die externe Wärme wird vorzugsweise immer dann zugeschaltet, wenn die Qualität des die Anlage verlassenden trockenen Druckluftstroms noch nicht ausreicht, um den Qualitätsansprüchen der Anwendung zu entsprechen. Dies ist insbesondere beim Hochfahren der Anlage der Fall. Alle bisher im Stand der Technik bekannten Anlagen, bei denen die Desorption mit Verdichtungswärme oder einem anderen erhitzten Druckluftstrom durchgeführt wird, können die Verfahrensschritte "Desorbieren" und "Kühlen" nur dann durchführen, wenn die Druckluft strömt. Ein so genanntes "Start up", bei dem das Trockenmittel in einen definierten Zustand gebracht wird, ist dabei nicht möglich. In den Anfahrphasen wurde bisher entweder eine geringe Qualität akzeptiert oder die kostspielig verdichtete Druckluft hinter dem Adsorptionsbehälter so lange abgeblasen, bis diese die erforderliche Qualität erreicht hat. Der Wärmetauscher dieser Weiterbildung der Erfindung, der dem Teilstrom externe Wärme zuführt, bleibt im Normalbetrieb ausgeschaltet. Nur beim Hochfahren der Anlage wird dieser zugeschaltet, so dass das Konditionieren der Adsorptionsbehälter deutlich schneller und ohne Druckluftverlust von statten geht.

Zwei Ausführungsbeispiele der vorliegenden Erfindung sollen nun anhand von Verfahrensfließbildern dargestellt werden. Hierfür zeigen:

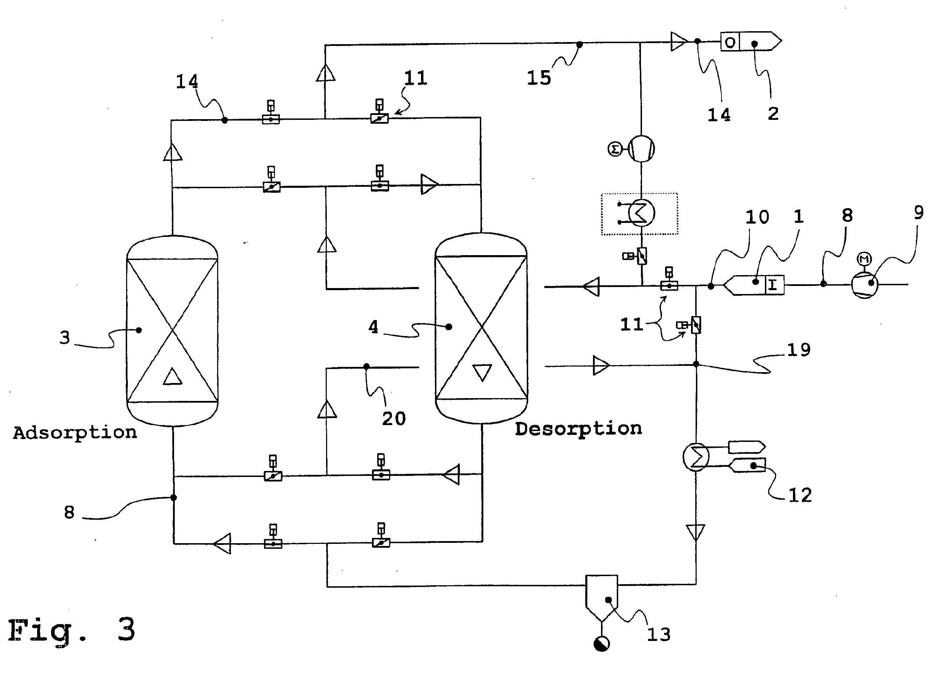

- Fig. 3:: erste Ausführungsform einer erfindungsgemäßen Anlage in Desorptionsphase;

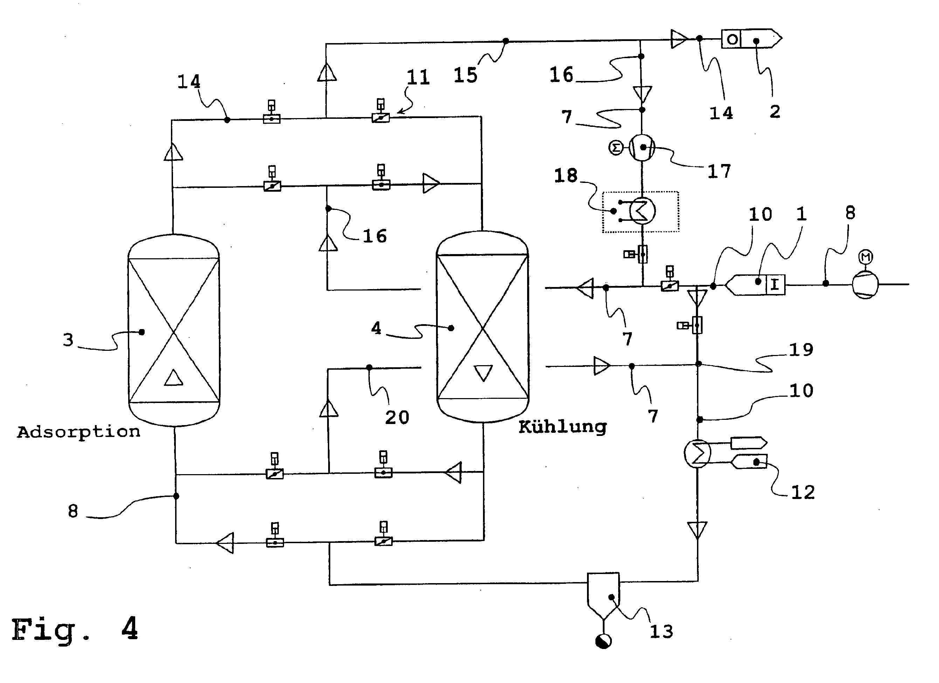

- Fig. 4:: Anlage aus Figur 3 in Kühlphase;

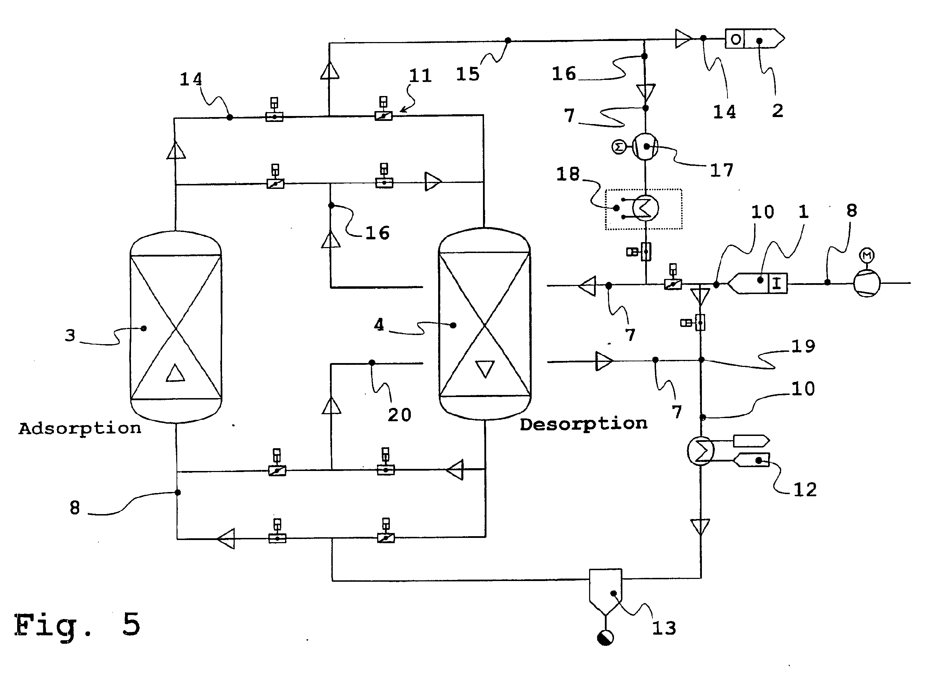

- Fig. 5:: Anlage aus Figur 3 in alternativer Desorptionsphase;

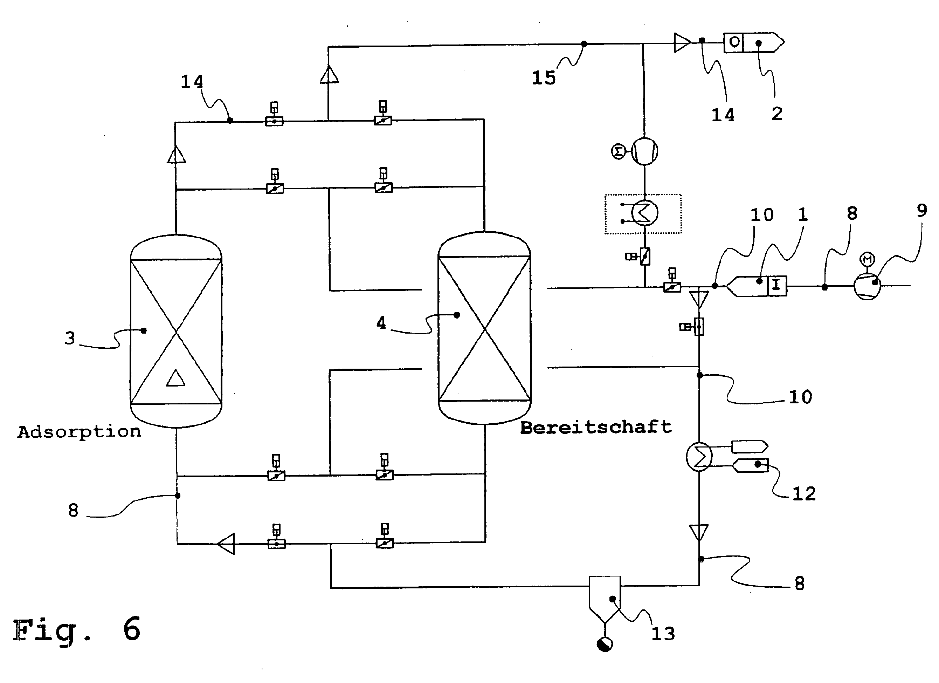

- Fig. 6:: Anlage aus Figur 3 in Bereitschaftsphase;

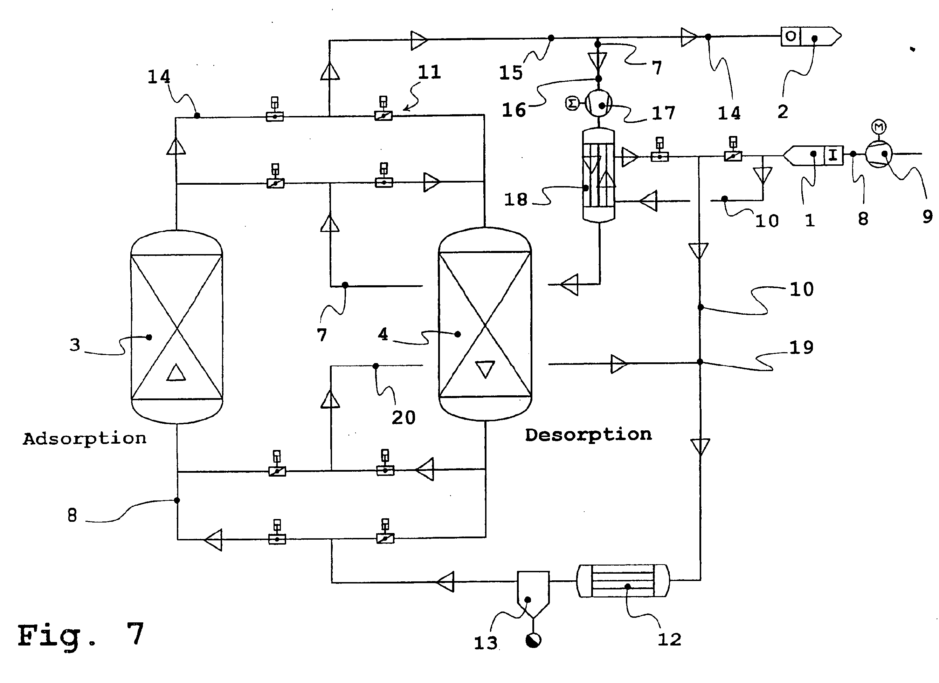

- Fig. 7:: zweite Ausführungsform einer erfindungsgemäßen Anlage in Desorptionsphase;

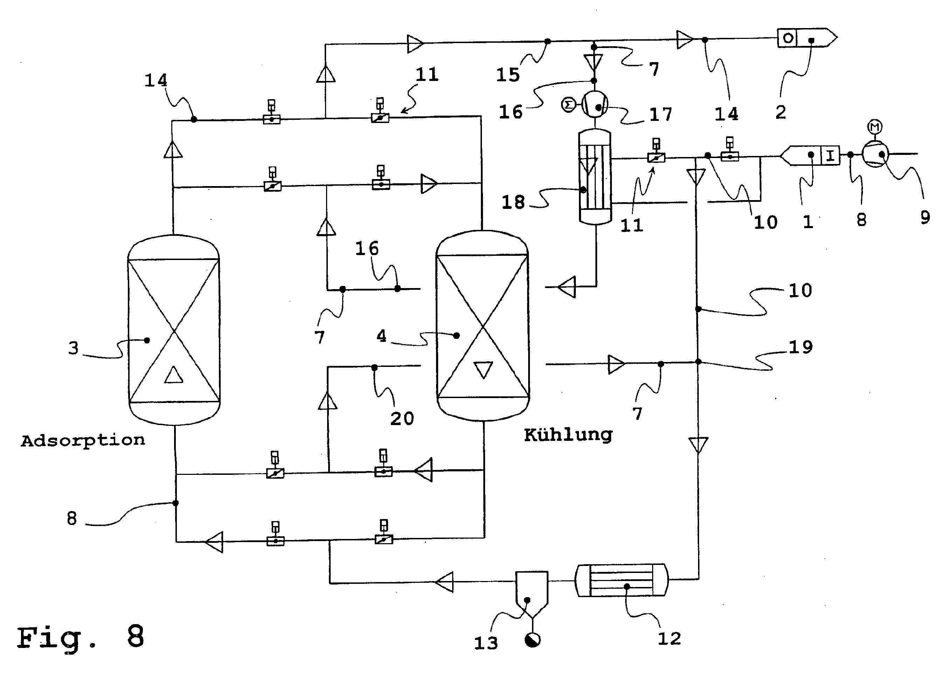

- Fig. 8:: Anlage aus Figur 7 in Kühlphase;

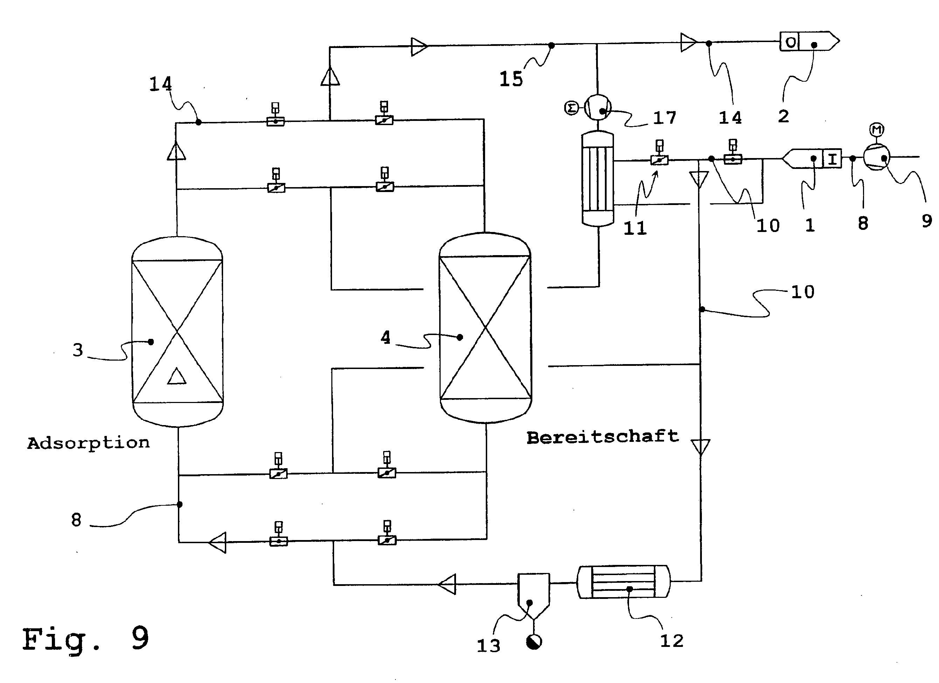

- Fig. 9;: Anlage aus Figur 7 in Bereitschaft.

Eine erste Ausführungsform einer Anlage für die Trocknung von Druckluft gemäß der Erfindung zeigen die Figuren 3, 4, 5 und 6 in unterschiedlichen Phasen. Feuchte Druckluft 8, die ein nicht zur Anlage gehöriger Kompressor 9 aus Umgebungsluft komprimiert hat, tritt durch Eintritt 1 in die Anlage ein. Der Kompressor 9 ist ohne Nachkühler ausgerüstet, so dass die eintretende feuchte Druckluft 8 wärmer als die Umgebungsluft ist. Eine Einlassleitung 10 verzweigt sich unmittelbar hinter dem Eintritt 1 und ist mit Hilfe einer Mehrzahl von Stellorganen 11 beidseitig auf jeden von zwei parallel geschalteten Adsorptionsbehälter 3, 4 schaltbar.

Bei dem in Figur 3 dargestellten Betriebszustand befindet sich der linke Adsorptionsbehälter 3 in Adsorptionsphase, der rechte Adsorptionsbehälter 4 in Regenerationsphase, genauer gesagt in der Desorption. Zur Desorption wird die warme, noch zu trocknende Druckluft 8 entlang der Einlassleitung 10 zunächst durch den rechten Adsorptionsbehälter 4 geleitet, um die Desorption durchzuführen. Dabei wird das Trockenmittel im rechten Adsorptionsbehälter 4 erwärmt, wodurch das darin enthaltene Wasser verdampft. Der warme, mit Wasserdampf beladene Druckluftstrom wird in einem Kühler 12 gekühlt. Die dabei kondensierende Feuchtigkeit wird von einer Tropfenfalle 13 abgeschöpft. Der zu trocknende Druckluftstrom 8 mit nun durch den in Adsorptionsbetrieb befindlichen Adsorptionsbehälter 3 hindurchgeführt, so dass das Produkt des Trocknungsprozesses - trockene Druckluft 14 - entsteht. Die trockene Druckluft 14 strömt entlang einer Auslassleitung 15 zum Austritt 2.

Unmittelbar vor dem Austritt 2 zweigt von der Auslassleitung 15 eine Teilstromleitung 16 ab, die in der in Figur 4 dargestellten Kühlphase benötigt wird. In Kühlphase wird mit Hilfe der Teilstromleitung 16 ein Teilstrom 7 der trockenen Druckluft 14 zu Kühlzwecken in die Anlage zurückgeführt. Hierfür wird zunächst der Druck des Teilstroms 7 mit Hilfe einer Druckerhöhungspumpe 17 gesteigert. Gegebenenfalls durchläuft die Teilstromleitung 16 einen Wärmeübertrager 18, in welchem der Teilstrom 7 bei Bedarf mittels eines externen Kühlmediums zusätzlich gekühlt werden kann. In der Regel ist dies aber nicht erforderlich. Der Teilstrom 7 wird nun durch den rechten Adsorptionsbehälter 4 geleitet und kühlt dort das enthaltene Trockenmittel, das dadurch wieder einsatzbereit wird. Der Teilstrom 7 wird hinter dem in Kühlphase befindlichen Behälter 4 bei Position 19 dem Strom der zu trocknenden Druckluft 8 in die Einlassleitung 10 beigemengt. Diese durchläuft dann wieder den adsorbierenden Behälter 3.

Figur 5 zeigt eine alternative Desorptionsphase während des Hochfahrens der Anlage, bei der die getrocknete Druckluft 14 noch nicht die erforderliche Qualität erreicht hat, um zuerst den rechten Adsorptionsbehälter 4 angemessen zu konditionieren. Hier wird - im Gegensatz zu der in Figur 3 gezeigten Desorptionsphase im laufenden Betrieb - die sonst nur in Kühlphase (Fig. 4) benötigte Druckerhöhungspumpe 17 eingeschaltet und ein Teilstrom 7 abgezweigt. Dieser wird im Wärmeübertrager 18 mit der Wärme eines externen Heizmediums erwärmt, um die Desorption des rechten Adsorptionsbehälters durchzuführen. Die gesamte Anlage wird während dieser Phase nicht durchströmt, sondern steht lediglich unter Betriebsdruck.

In Figur 6 hat der rechte Adsorptionsbehälter 4 seine Wasserbeladung wieder vollständig abgegeben und befindet sich nun in Bereitschaft. Dabei wird er nicht von Druckluft durchströmt. Ein Abzweigen eines Teilstroms der trockenen Druckluft 14 ist nicht erforderlich. Der gesamte Volumenstrom der einströmenden feuchten Druckluft 8 wird ohne anlageninterne Zirkulation vollständig aus dem Austritt 2 ausgestoßen.

Die Figuren 7 bis 9 zeigen eine zweite Ausführungsform einer erfindungsgemäßen Anlage zur Drucklufttrocknung. Sie unterscheidet sich gegenüber der ersten Ausführungsform durch die Führung des Desorptions-Druckluftstroms. Zur Desorption (Figur 7) wird hier ein Teilstrom 7 aus der trockenen Druckluft 14 mit Hilfe einer unmittelbar vor dem Austritt 2 aus der Auslassleitung 15 abzweigenden Teilstromleitung 16 abgezweigt. Der Druck des Teilstroms 7 wird mit Hilfe einer Druckerhöhungspumpe 17 gesteigert, die in der Teilstromleitung 16 angeordnet ist. Danach durchläuft der Teilstrom 7 einen Wärmeübertrager 18, in welchem er mit Hilfe der Kompressionswärme des Kompressors 9 vorgewärmt wird.

Hierzu wird die feuchte warme Druckluft 8 unmittelbar hinter ihrem Eintritt in die Anlage durch den Eintritt 1 entlang einer Einlassleitung 10 durch den Wärmeübertrager 18 geführt. Dort wird die in der feuchten Druckluft 8 enthaltene Kompressionswärme auf den Teilstrom 7 der trockenen Druckluft 14 übertragen. Der so vorgewärmte Teilstrom 7 der trockenen Druckluft wird zur Desorption durch den rechten Behälter 4 geleitet und anschließend bei Position 19 in die Einlassleitung 10 zurückgeführt, so dass der Teilstrom 7 der feuchten Druckluft 8 wieder beigemengt wird. Wie bei der ersten Ausführungsform der Erfindung wird die feuchte Druckluft 8 nun zunächst in einem Kühler 12 gekühlt, dann in einer Tropfenfalle 13 kondensiert, durch den adsorbierenden Adsorptionsbehälters 3 getrocknet und durch die Auslassleitung 15 aus der Anlage fortgeführt.

Eine Gemeinsamkeit der ersten und zweiten Ausführungsform der Erfindung besteht darin, dass der Teilstrom 7 zur Kühlung des rechten Adsorptionsbehälters 4 benutzt wird. Dementsprechend sind in der Kühlphase des zweiten Ausführungsbeispiels (Figur 8) die Stellorgane 11 so geschaltet, dass die Einlassleitung 10 nicht durch den Wärmeübertrager 18 geführt wird. Die Druckerhöhungspumpe 17 läuft während der Kühlphase, um den Teilstrom 7 bei 19 auf Kompressorniveau in die Einlassleitung 10 einzuspeisen.

Im Bereitschaftsbetrieb (Figur 9) wird die Druckerhöhungspumpe 17 abgeschaltet, so dass der bereitstehende Behälter 4 undurchströmt ist.

Eine weitere Gemeinsamkeit beider Ausführungsbeispielen besteht in der Ausnutzung der Kompressorwärme bei der Desorption. In der ersten Anlage (Fig. 3) wird die Kompressorwärme unmittelbar von dem Strom der noch feuchten, zu trocknenden Druckluft 8 auf das Trockenmittel übertragen. In der zweiten Anlage (Fig. 7) wird die Kompressorwärme im Wärmeübertrager 18 abgeschöpft und auf den desorbierenden Teilstrom 7 übertragen.

## Patentansprüche

1. Anlage zum Trocknen von mit Kompressorwärme beladener, feuchter Druckluft (8),
a) mit einem Eintritt (1), durch welchen zu trocknende, feuchte Druckluft (8) in die Anlage eintritt, und mit einem Austritt, durch welchen trockene Druckluft (14) aus der Anlage austritt,
b) mit zumindest zwei parallel geschalteten, mit Trocknungsmittel gefüllten Adsorptionsbehältern (3, 4), die über eine Einlassleitung (10) mit dem Eintritt (1) und über eine Auslassleitung (15) mit dem Austritt (2) verbunden sind,
c) wobei stets mindestens einer der Adsorptionsbehälter (3, 4) sich im Adsorptionsbetrieb befindet, währenddessen mindestens ein anderer sich entweder im undurchströmten Bereitschaftsbetrieb oder im Regenerationsbetrieb befindet,
**gekennzeichnet durch**
d) eine von der Auslassleitung (15) abzweigende, auf den im Regenerationsbetrieb befindlichen Adsorptionsbehälter (4) schaltbare und einen Teilstrom (7) trockener Druckluft (14) abzweigende Teilstromleitung (16),
e) eine Druckerhöhungspumpe (17), **durch** welche die Teilstromleitung (16) zur Steigerung des Druckes des Teilstroms (7) trockener Druckluft (14) läuft,
f) eine von dem im Regenerationsbetrieb befindlichen Adsorptionsbehälter (4) auf die Einlassleitung (10) schaltbare Rückführleitung (20), über die der Teilstrom (7) trockener Druckluft (14) von dem im Regenerationsbetrieb befindlichen Adsorptionsbehälter (4) abführbar und dem Strom der zu trocknenden, feuchten Druckluft (8) beimengbar ist, und
g) einen Kühler (12), der derart angeordnet ist, dass mit ihm die Vermengung aus dem Strom der zu trocknenden, feuchten Druckluft (8) und dem Teilstrom (7) trockener Druckluft (14) kühlbar ist.

2. Anlage nach Anspruch 1, **gekennzeichnet durch** einen Wärmeübertrager (18), mit dem Wärme von der zu trocknenden, feuchten Druckluft (8) auf den entlang der Teilstromleitung (16) geführten Teilstrom (7) trockener Druckluft (14) übertragbar ist, und den die Teilstromleitung (16) durchläuft, bevor sie in den im Regenerationsbetrieb befindlichen Adsorptionsbehälter (4) mündet.

3. Anlage nach Anspruch 2, **dadurch gekennzeichnet, dass** mittels des Wärmeübertragers (18) Wärme des entlang der Teilstromleitung (16) geführten Teilstroms (7) trockener Druckluft (14) auf ein externes Kühlmedium übertragbar ist.

4. Anlage nach Anspruch 2 oder 3, **dadurch gekennzeichnet, dass** mittels des Wärmeübertragers (18) Wärme eines externen Heizmediums auf den entlang der Teilstromleitung (16) geführten Teilstrom (7) trockener Druckluft (14) übertragbar ist.

5. Verfahren zum Regenerieren eines im Regenerationsbetrieb befindlichen, mit einem Trocknungsmittel gefüllten Adsorptionsbehälters (4), welcher parallel zu wenigstens einem anderen im Adsorptionsbetrieb befindlichen Adsorptionsbehälter (3) geschaltet ist, wobei der im Adsorptionsbetrieb befindliche Adsorptionsbehälter (3) zu trocknende, feuchte Druckluft (8) trocknet, sodass trockene Druckluft (14) entsteht, wobei
- aus der trockenen Druckluft (14) ein Teilstrom (7) trockener Druckluft (14) abgezweigt wird,
- der Druck des abgezweigten Teilstroms (7) trockener Druckluft (14) gesteigert wird,
- der druckgesteigerte Teilstrom (7) trockener Druckluft (14) durch den im Regenerationsbetrieb befindlichen Adsorptionsbehälter (4) hindurchgeführt wird,
- der durch den im Regenerationsbetrieb befindlichen Adsorptionsbehälter (4) hindurchgeführte Teilstrom (7) trockener Druckluft (14) dem Strom der zu trocknenden, feuchten Druckluft (8) beigemengt wird, und
- die Vermengung aus dem Strom der zu trocknenden, feuchten Druckluft (8) und dem Teilstrom (7) trockener Druckluft (14) vor ihrem Eintritt in den im Adsorptionsbetrieb befindlichen Adsorptionsbehälter (3) gekühlt wird.

6. Verfahren nach Anspruch 5, **dadurch gekennzeichnet, dass** das Trocknungsmittel des im Regenerationsbetrieb befindlichen Adsorptionsbehälters (4) mit Hilfe des Teilstroms (7) trockener Druckluft (14) getrocknet wird.

7. Verfahren nach Anspruch 5, **dadurch gekennzeichnet, dass** das Trocknungsmittel des im Regenerationsbetrieb befindlichen Adsorptionsbehälters (4) mit Hilfe des Teilstroms (7) trockener Druckluft (14) gekühlt wird.

8. Verfahren nach einem der Ansprüche 5 bis 7, **dadurch gekennzeichnet, dass** der Teilstrom (7) trockener Druckluft (14) vor Einströmen in den im Regenerationsbetrieb befindlichen Adsorptionsbehälter (4) durch einen Wärmeübertrager (18) geführt wird.

9. Verfahren nach Anspruch 8, **dadurch gekennzeichnet, dass** der Teilstrom (7) trockener Druckluft (14) in dem Wärmeübertrager (18) gekühlt wird.

10. Verfahren nach Anspruch 8, **dadurch gekennzeichnet, dass** der Teilstrom (7) trockener Druckluft (14) in dem Wärmeübertrager (18) erwärmt wird.

11. Verfahren nach Anspruch 10, **dadurch gekennzeichnet, dass** der Teilstrom (7) trockener Druckluft (14) in dem Wärmeübertrager (18) von einem externen Heizmedium erwärmt wird.

12. Verfahren nach Anspruch 10, **dadurch gekennzeichnet, dass** der Teilstrom (7) trockener Druckluft (14) in dem Wärmeübertrager (18) von der zu trocknenden, feuchten Druckluft (8) erwärmt wird.

13. Verfahren zum Betrieb einer Anlage nach einem der Ansprüche 1 bis 4, **dadurch gekennzeichnet, dass** zur Regeneration des im Regenerationsbetrieb befindlichen Adsorptionsbehälters (4) ein Verfahren nach einem der Ansprüche 5 bis 12 angewandt wird.

## Claims

1. Facility for drying moist compressed air charged with compression heat,
a) with an entrance (1), through which moist compressed air (8) to be dried enters the facility, and with an exit (2), through which dry compressed air (14) exits the facility,
b) with at least two parallel connected, drying agent filled adsorption containers (3, 4), which are connected via an inlet conduit (10) with the entrance (1) and via an outlet conduit (15) with the exit (2),
c) wherein always at least one (3) of said adsorption containers (3, 4) is in the adsorption mode, while at least another (4) is either in the unstreamed standby mode or in the regeneration mode,
**characterized by**
d) a branch current conduit (16) branching a branch current (7) of the dry compressed air (14) from the outlet conduit (15), the branch current conduit (16) being connectable with the adsorption container (4), which is in the regeneration mode,
e) a pressure increasing pump (17) through which the branch current conduit (16) passes for increasing the pressure of the branch current (7) of the dry compressed air (14),
f) a return conduit (20), which is connectable from the adsorption container (4) that is in the regeneration mode to the inlet conduit (10), via which return conduit (20) the branch current (7) of the dry compressed air (14) is brancheable from the adsorption container (4) that is in the regeneration mode and admixable to the stream of the moist compressed air (8) to be dried, and
g) a cooler (12) arranged to cool the mixture of the stream of moist compressed air (8) to be dried and the branch current (7) of the dry compressed air (14).

2. Facility according to claim 1, **characterized by** a heat exchanger (18), by which heat of the moist compressed air (8) to be dried is transferable to the branch current (7) of the dry compressed air (14) conducted along the branch current conduit (16), wherein the branch current conduit (16) passes through the heat exchanger (18) before it ends in the adsorption container (4) that is in the regeneration mode.

3. Facility according to claim 2, **characterized in that** heat of the branch current (7) of the dry compressed air (14) conducted along the branch current conduit (16) is transferable to an external cooling medium.

4. Facility according to claim 2 or 3, wherein heat of an external heating medium is transferable to the branch current (7) of the dry compressed air (14) conducted along the branch current conduit (16) by means of the heat exchanger (18).

5. Method for regenerating of an adsorption container (4) that is in the regeneration mode, which is filled with a drying agent, and which is parallel connected to another adsorption container (3) that is in the adsorption mode, wherein the adsorption container (3) that is in the adsorption mode dries moist compressed air (8) to be dried so that dry compressed air (14) is generated, wherein
- a branch current (7) is branched from the dry compressed air (14),
- the pressure of said branch current (7) is increased,
- the branch current (7) of dry compressed air increased in pressure is conducted through the adsorption container (4) that is in the regeneration mode,
- the branch current (7) of dry compressed air conducted through the adsorption container (4) that is in the regeneration mode is admixed to the stream of moist compressed air to be dried, and
- the mixture of the stream of moist compressed air (8) to be dried and the branch current (7) of the dry compressed air (14) is cooled before inflowing in the adsorption container (3) that is in the adsorption mode.

6. Method according to claim 5, **characterized in that** the drying agent of the adsorption container (4) that is in the regeneration mode is dried by means of the branch current (7) of the dry compressed air (14).

7. Method according to claim 5, **characterized in that** the drying agent of the adsorption container (4) that is in the regeneration mode is cooled by means of the branch current (7) of the dry compressed air (14).

8. Method according to any one of claims 5 to 7, **characterized in that** the branch current (7) of the dry compressed air (14), before inflowing in the adsorption container (4) that is in the regeneration mode, is conducted through a heat exchanger (18).

9. Method according to claim 8, **characterized in that** the branch current (7) of the dry compressed air (14) is cooled in the heat exchanger (18).

10. Method according to claim 8, **characterized in that** the branch current (7) of the dry compressed air (14) is heated in the heat exchanger (18).

11. Method according to claim 10, **characterized in that** the branch current (7) of the dry compressed air (14) is heated in the heat exchanger (18) by an external heating medium.

12. Method according to claim 10, wherein the branch current (7) of the dry compressed air (14) is heated in the heat exchanger (18) by the moist compressed air (8) to be dried.

13. Method for operating a facility according to any of the claims 1 to 4, **characterized in that** a method according to one of the claims 5 to 12 is used for regenerating the adsorption container (4) which is in the regeneration mode.

## Revendications

1. Installation pour le séchage de l'air comprimé humide (8) chargé de la chaleur du compresseur,
a) comportant une entrée (1) par laquelle l'air comprimé humide (8) à sécher est admis dans l'installation, et comportant une sortie par laquelle l'air comprimé sec (14) quitte l'installation,
b) comportant au moins deux cuves d'adsorption (3, 4) montées en parallèles, contenant un agent de séchage et reliées à l'entrée (1) via une conduite d'admission (10) et à la sortie (2) via une conduite d'évacuation (15),
c) au moins une des deux cuves d'adsorption (3, 4) fonctionnant toujours en mode d'adsorption, alors qu'au moins une autre cuve est en mode d'attente sans passage d'air comprimé ou en mode de régénération,
**caractérisée par**
d) une conduite de flux partiel (16), branchée sur la conduite d'évacuation (15), pouvant être raccordée à la cuve d'adsorption (4), qui fonctionne en mode de régénération, et transportant un flux partiel (7) d'air comprimé sec (14),
e) une pompe d'augmentation de pression (17), à travers laquelle passe la conduite de flux partiel (16) en vue de l'augmentation de la pression du flux partiel (7) d'air comprimé sec (14),
f) une conduite de retour (20), qui est propre à être raccordée à la conduite d'admission (10) à partir de la cuve d'adsorption (4) fonctionnant en mode de régénération, et via laquelle le flux partiel (7) d'air comprimé sec (14) peut être évacué hors de la cuve d'adsorption (4) fonctionnant en mode de régénération et être mélangé au flux d'air comprimé humide (8) à sécher, et
g) un refroidisseur (12) qui est agencé de telle sorte qu'il est apte à refroidir le mélange formé par le flux d'air comprimé humide (8) à sécher et le flux partiel (7) d'air comprimé sec (14).

2. Installation selon la revendication 1, **caractérisée par** un échangeur thermique (18), par lequel la chaleur issue de l'air comprimé humide (8) à sécher peut être transmise au flux partiel (7) d'air comprimé sec (14) guidé le long de la conduite de flux partiel (16), et lequel est traversé par la conduite de flux partiel (16) avant qu'elle débouche dans la cuve d'adsorption (4) fonctionnant en mode de régénération.

3. Installation selon la revendication 2, **caractérisée en ce que** l'échangeur thermique (18) permet de transmettre à un agent de refroidissement externe la chaleur du flux partiel (7) d'air comprimé sec (14) guidé le long de la conduite de flux partiel (16).

4. Installation selon la revendication 2 ou 3, **caractérisée en ce que** l'échangeur thermique (18) permet de transmettre un agent de chauffage externe au flux partiel (7) d'air comprimé sec (14) guidé le long de la conduite de flux partiel (16).

5. Procédé permettant la régénération d'une cuve d'adsorption (4) fonctionnant en mode de régénération, contenant un agent de séchage et montée parallèlement à au moins une autre cuve d'adsorption (3) fonctionnant en mode d'adsorption, ladite cuve d'adsorption (3) fonctionnant en mode d'adsorption séchant l'air comprimé humide (8) à sécher, de manière à former l'air comprimé sec (14), selon lequel
- un flux partiel (7) d'air comprimé sec (14) est dérivé de l'air comprimé sec (14),
- la pression du flux partiel (7) d'air comprimé sec (14) dérivé est augmentée,
- le flux partiel (7) d'air comprimé sec (14) à pression accrue est guidé à travers la cuve d'adsorption (4) fonctionnant en mode de régénération,
- le flux partiel (7) d'air comprimé sec (14), traversant la cuve d'adsorption (4) en mode de régénération est mélangé au flux d'air comprimé humide (8) à sécher, et
- le mélange formé par le flux d'air comprimé humide (8) à sécher et le flux partiel (7) d'air comprimé sec (14) est refroidi avant son admission dans la cuve d'adsorption (3) fonctionnant en mode d'adsorption.

6. Procédé selon la revendication 5, **caractérisé en ce que** l'agent de séchage de la cuve d'adsorption (4) fonctionnant en mode de régénération est séché au moyen du flux partiel (7) d'air comprimé sec (14).

7. Procédé selon la revendication 5, **caractérisé en ce que** l'agent de séchage de la cuve d'adsorption (4) fonctionnant en mode de régénération est refroidi au moyen du flux partiel (7) d'air comprimé sec (14).

8. Procédé selon l'une quelconque des revendications 5 à 7, **caractérisé en ce que** le flux partiel (7) d'air comprimé sec (14) est guidé à travers un échangeur thermique (18) avant son admission dans la cuve d'adsorption (4) fonctionnant en mode de régénération.

9. Procédé selon la revendication 8, **caractérisé en ce que** le flux partiel (7) d'air comprimé sec (14) est refroidi dans l'échangeur thermique (18).

10. Procédé selon la revendication 8, **caractérisé en ce que** le flux partiel (7) d'air comprimé sec (14) est chauffé dans l'échangeur thermique (18).

11. Procédé selon la revendication 10, **caractérisé en ce que** le flux partiel (7) d'air comprimé sec (14) est chauffé dans l'échangeur thermique (18) par un agent de chauffage externe.

12. Procédé selon la revendication 10, **caractérisé en ce que** le flux partiel (7) d'air comprimé sec (14) est chauffé dans l'échangeur thermique (18) par l'air comprimé humide (8) à sécher.

13. Procédé permettant le fonctionnement d'une installation selon l'une quelconque des revendications 1 à 4, **caractérisé en ce qu'**un procédé selon l'une quelconque des revendications 5 à 12 est utilisé pour la régénération de la cuve d'adsorption (4) fonctionnant en mode de régénération.
